# EUROPEAN PATENT APPLICATION

(11) **EP 4 632 917 A1**
(43) Date of publication of application: **15.10.2025**
(21) Application number: 24198248.7
(22) Date of filing: 03.09.2024
(51) Int. Cl.: H01M 50/342, H01M 50/383, H01M 50/202, H01M 50/242, H01M 50/289

(54) **BATTERY CELL, BATTERY MODULE, AND METHOD OF MANUFACTURING BATTERY MODULE**

(30) Priority: 08.04.2024 KR 20240047452
(71) Applicant: SAMSUNG SDI CO., LTD., Yongin-si, Gyeonggi-do 17084 (KR)
(72) Inventor: KIM, Young Deok, 16678 Suwon-si (KR)
(74) Representative: Marks & Clerk LLP

(57) **Abstract**

The present disclosure relates to a battery cell, a battery module, and a method of manufacturing the battery module, and is directed to providing a battery cell in which a blocking member (240) is capable of being opened and closed depending on a state of the battery cell, a battery module, and a method of manufacturing the battery module. To this end, the present disclosure provides a battery cell including a case (210) accommodating an electrode assembly, a cap plate (220) disposed on the case and sealing the case, a vent (230) provided on the cap plate and opened and closed in conjunction with pressure changes inside the case, and a blocking member (240) seated on the cap plate, disposed to face the vent, and moved with pressure changes inside or outside the case. With a battery cell, a battery module, and a method of manufacturing the battery module according to an embodiment of the present invention, it is possible to open and close a blocking member depending on the state of the battery cell.

## Description

### BACKGROUND

### 1. Field of the Invention

Aspects of embodiments of the present disclosure relate to a battery cell, a battery module, and a method of manufacturing a battery module.

### 2. Description of the Related Art

While a battery module is used, a fire may occur in a battery cell due to overcharging, heat exposure, an external short circuit, heat propagation, or the like. The fire occurring in the battery cell may be discharged to the outside through a vent provided in the battery cell, thereby minimizing or reducing thermal runaway of the battery module.

However, when the vent is opened, heat is transferred to adjacent battery cells due to flames, foreign substances, and high-temperature gases ejected from the vent, which may cause thermal runaway in the adjacent battery cells. In order to prevent thermal runaway in an adjacent battery cell, an insulating member for protecting an upper portion of the vent may be provided.

The insulating member for protecting the upper portion of the vent may prevent thermal runaway of adjacent cells, but when the insulating member is not opened, problems may occur where flames, foreign substances, and high-temperature gases generated from a battery cell where an event occurs are not discharged from the battery cell. Accordingly, there is a need for an insulating member capable of being opened and closed depending on a situation.

The above information disclosed in this Background section is provided for enhancement of understanding of the background of the present disclosure, and, therefore, may contain information that does not constitute related (or prior) art.

### SUMMARY OF THE INVENTION

According to an aspect of embodiments of the present invention, a battery cell in which a blocking member is capable of being opened and closed depending on a state of the battery cell, a battery module, and a method of manufacturing a battery module are provided.

According to another aspect of embodiments of the present invention, a battery cell in which a blocking member is opened when an event occurs, a battery module, and a method of manufacturing a battery module are provided.

According to another aspect of embodiments of the present invention, a battery cell including a blocking member to protect adjacent battery cells even if an event occurs, a battery module, and a method of manufacturing a battery module are provided.

The above and other aspects and features of the present disclosure will be described in or will be apparent from the following description of some embodiments of the present disclosure.

According to one or more embodiments of the present invention, a battery cell includes a case accommodating an electrode assembly, a cap plate on the case and sealing the case, a vent on the cap plate and configured to be opened and closed with pressure changes inside the case, and a blocking member seated on the cap plate, facing the vent, and movable with pressure changes inside or outside the case.

The blocking member may be movable toward the cap plate as a pressure outside the case increases to a certain value (e.g., a set value) or more than a pressure inside the case.

The blocking member may be movable away from the cap plate as the pressure inside the case increases to a certain value (e.g., a set value) or more than the pressure outside the case.

The blocking member may include a notch for inducing fracture of the blocking member.

The notch may be configured to allow a side of the blocking member to communicate with another side thereof and may include a first notch having a certain length (e.g., a set length) and a second notch extending from the first notch.

The blocking member may be bent.

The blocking member may include a first bent portion and a second bent portion.

The blocking member may be bent away from the cap plate at the first bent portion, and bent toward the cap plate at the second bent portion.

The blocking member may include an adhesive in the notch.

The battery cell may further include a support member to support a lower side of the blocking member.

A melting point of the adhesive may be 90 to 300 degrees Celsius.

According to one or more embodiments of the present invention, a battery module includes a housing and a plurality of battery cells in the housing, and each of the plurality of battery cells includes a case accommodating an electrode assembly, a cap plate on the case and sealing the case, a vent on the cap plate and configured to be opened and closed in conjunction with pressure changes inside the case, and a blocking member seated on the cap plate, facing the vent, and movable with pressure changes inside or outside the case.

The blocking member may include a plurality of blocking members connected to each other.

The plurality of cells may each be a battery cell as defined above with respect to the earlier embodiment.

According to one or more embodiments of the present invention, a method of manufacturing a battery module includes forming a notch for forming a blocking member piece in a blocking unit, forming a bent portion in the blocking member piece in the blocking unit, and arranging the blocking unit on a unit cell.

The forming of the notch may include forming a first notch having a length and a second notch extending from the first notch.

The battery module may be the battery module defined above.

The forming of the bent portion may include or comprise forming a first bent portion by bending the blocking member piece upward and forming a second bent portion by bending the blocking member piece downward.

The method may further include or comprise arranging a support member supporting a lower side of the blocking unit prior to arranging the blocking unit on the unit cell.

The method may further include or comprise applying an adhesive to the notch after the arranging of the support member.

The blocking unit may include or comprise a plurality of blocking members, and the arranging of the blocking unit on the unit cell may include arranging the plurality of blocking members on a plurality of unit cells, respectively.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure are not to be construed as being limited to the drawings.
FIG. 1 is an exploded perspective view schematically illustrating a configuration of a battery module according to an embodiment of the present invention;
FIG. 2 is a plan view schematically illustrating the configuration of the battery module of FIG. 1;
FIG. 3 is a partial cross-sectional view schematically illustrating the configuration of the battery module of FIG. 1;
FIG. 4 is a perspective view schematically illustrating a configuration of a battery cell according to an embodiment of the present invention;
FIG. 5 is an exploded perspective view schematically illustrating the configuration of the battery cell of FIG. 4;
FIG. 6 is a cross-sectional view taken along the line A-A' in FIG. 4;
FIG. 7 is a partial cross-sectional view taken along the line B-B' in FIG. 4;
FIG. 8 is a partial cross-sectional perspective view taken along the line B-B' in FIG. 4;
FIG. 9 is a plan view of a blocking member disposed in the battery cell according to an embodiment of the present invention;
FIG. 10 is a perspective view of the blocking member disposed in the battery cell according to an embodiment of the present invention;
FIG. 11 is a cross-sectional view taken along the line C-C' in FIG. 9;
FIG. 12 is a cross-sectional view taken along the line D-D' in FIG. 9;
FIG. 13 is a partial cross-sectional view of a plurality of battery cells arranged side by side without an event occurring, according to an embodiment of the present invention;
FIG. 14 is a partial cross-sectional view of battery cells of which a battery cell in which an event occurs and a battery cell in which an event does not occur are arranged side by side, according to an embodiment of the present invention;
FIG. 15 is a cross-sectional view of a blocking member of the battery cell in which an event does not occur, according to an embodiment of the present invention;
FIG. 16 is a cross-sectional view of a blocking member of the battery cell in which an event occurs, according to an embodiment of the present invention;
FIG. 17 is a perspective view of various states of the blocking member according to an embodiment of the present invention;
FIG. 18 is an exploded perspective view schematically illustrating a configuration of a battery module according to another embodiment of the present invention;
FIG. 19 is a plan view schematically illustrating the configuration of the battery module of FIG. 18;
FIG. 20 is a plan view of a blocking unit provided in a shape according to an embodiment of the present invention;
FIG. 21 is a plan view of the blocking unit in which a notch is formed according to an embodiment of the present invention;
FIG. 22 is a plan view of a blocking member formed in the blocking unit by forming a bent portion according to an embodiment of the present invention;
FIG. 23 is a perspective view of the blocking unit including a support member according to an embodiment of the present invention;
FIG. 24 is a perspective view of the blocking member provided with an adhesive according to an embodiment of the present invention;
FIG. 25 is a perspective view of the blocking member according to an embodiment of the present invention; and
FIG. 26 is a flowchart of a method of manufacturing a battery module according to an embodiment of the present invention.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

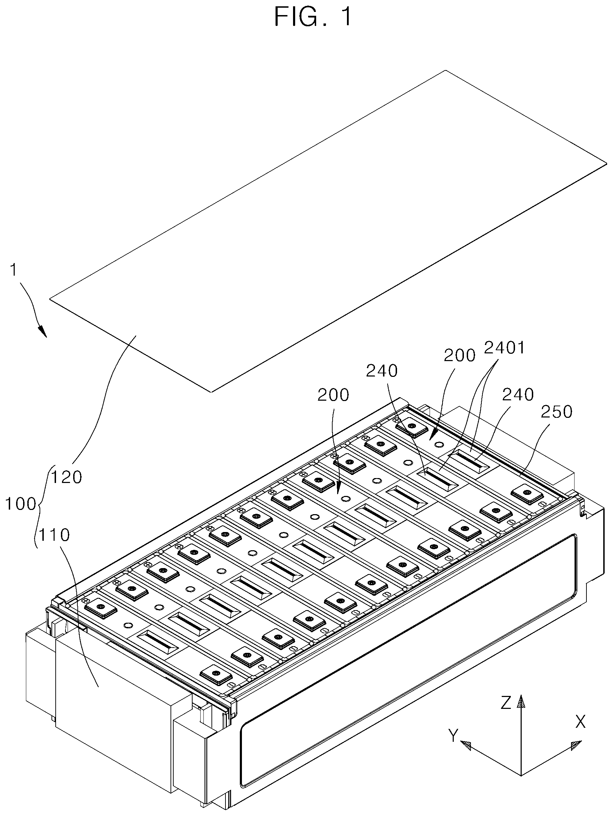

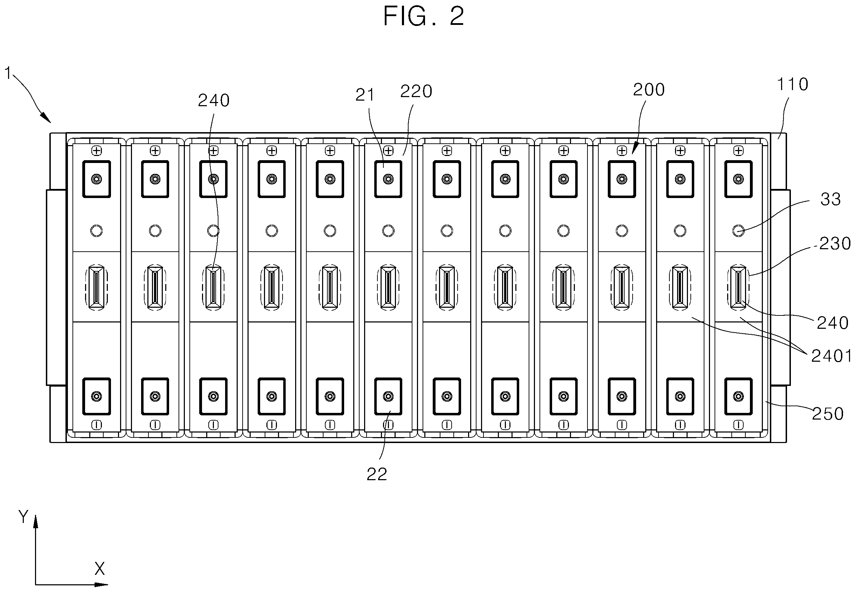

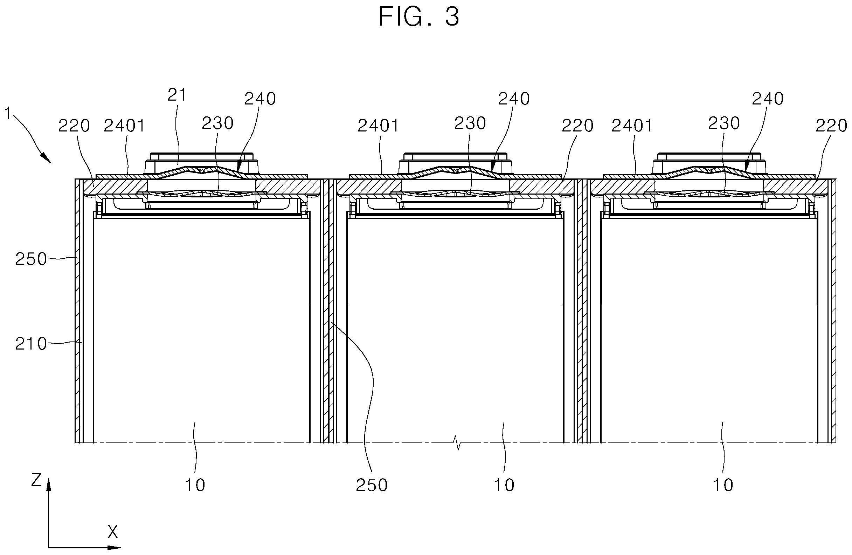

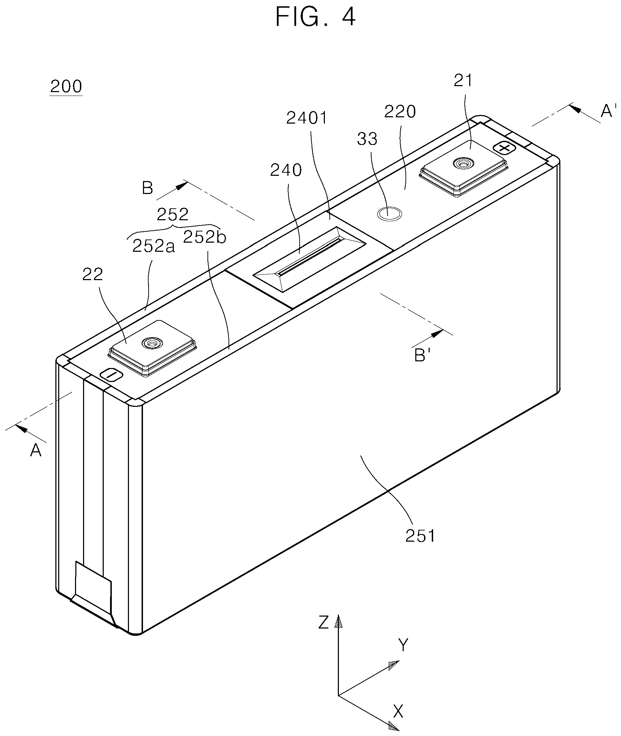

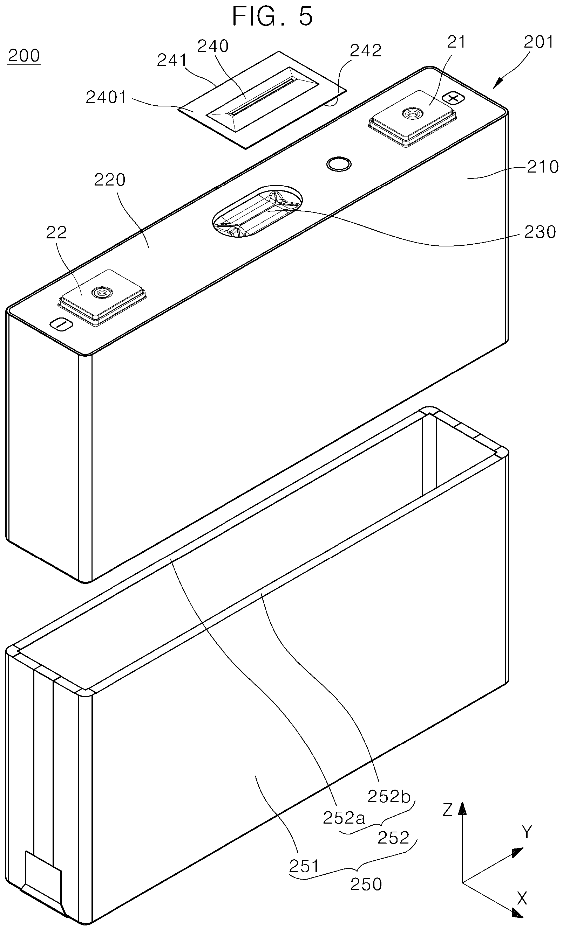

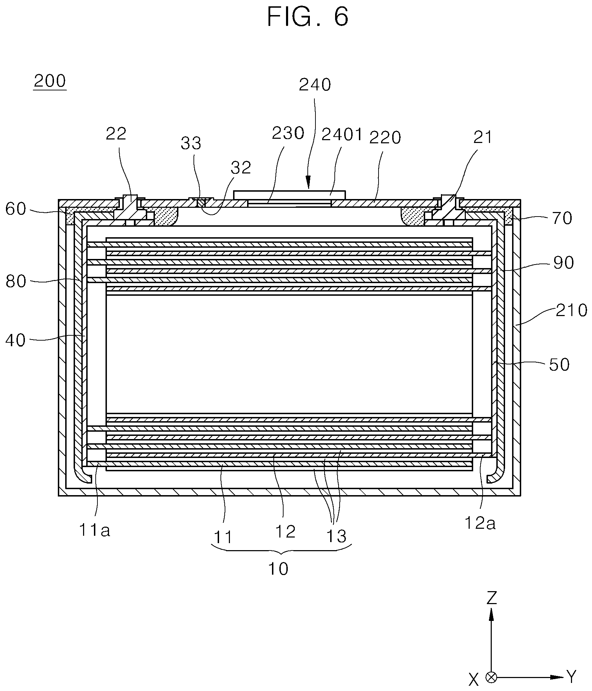

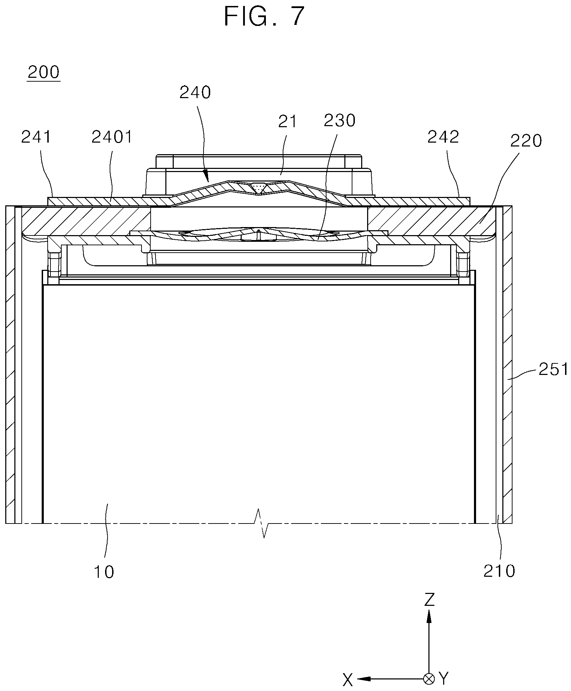

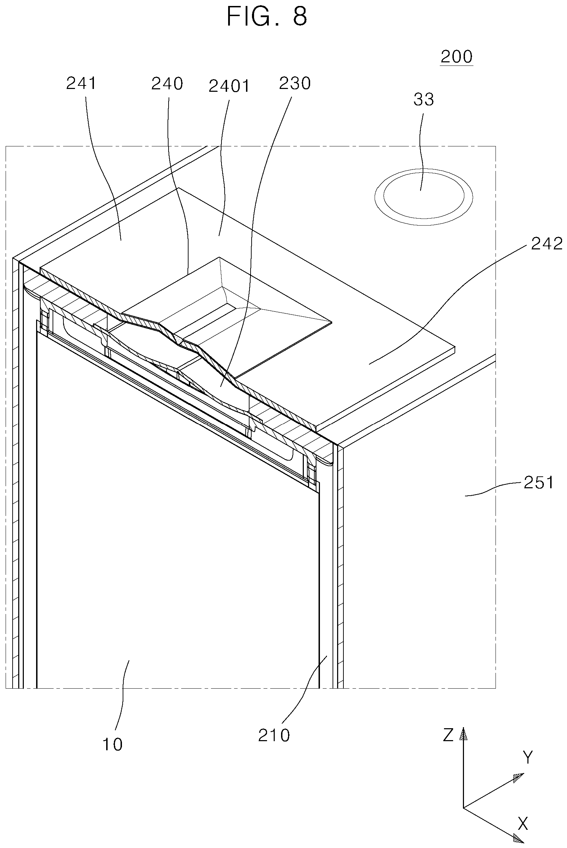

FIG. 1 is an exploded perspective view schematically illustrating a configuration of a battery module according to an embodiment of the present invention; FIG. 2 is a plan view schematically illustrating the configuration of the battery module of FIG. 1; FIG. 3 is a cross-sectional view schematically illustrating the configuration of the battery module of FIG. 1; FIG. 4 is a perspective view schematically illustrating a configuration of a battery cell according to an embodiment of the present invention; FIG. 5 is an exploded perspective view schematically illustrating the configuration of the battery cell of FIG. 4; FIG. 6 is a cross-sectional view taken along the line A-A' in FIG. 4; FIG. 7 is a cross-sectional view taken along the line B-B' in FIG. 4; and FIG. 8 is a cross-sectional perspective view taken along the line B-B' in FIG. 4.

Referring to FIGS. 1 to 8, a battery module 1 according to an embodiment includes a housing 100 and a battery cell 200.

The housing 100 may generally form an exterior of the battery module 1, and may support the battery cell 200, which will be described below. The housing 100 may include a housing body 110 and a housing cover 120.

The housing body 110 may be formed to be hollow inside and have a shape with a side open. According to an embodiment, the housing body 110 may be formed to have a box or quadrangular shape, as illustrated in FIG. 1. However, a design of the cross-sectional shape of the housing body 110 may be varied to any of various shapes other than a quadrangular shape.

The housing cover 120 may open and close an internal space of the housing body 110. The housing cover 120 may cover an opening of the housing body 110. The housing cover 120 may be formed to have a generally plate shape, and may be disposed to face the open upper side of the housing body 110. In an embodiment, the housing cover 120 may be detachably coupled to the housing body 110 by any of various coupling methods, such as bolting, insertion-coupling, or the like.

The battery cell 200 may be a unit structure that stores and supplies energy in the battery module 1.

A plurality of battery cells 200 may be provided. The plurality of battery cells 200 may be disposed inside the housing 100. The plurality of battery cells 200 may be arranged along a first direction inside the housing 100. Here, the first direction may refer to a direction parallel to an X-axis based on FIG. 1. However, a number of battery cells 200 is not limited to a number illustrated in FIG. 1, and a design may be varied in various ways depending on a size of the battery module 1 or the like.

Herein, the battery cell 200 will be described, as an example, of a prismatic shape. However, the present invention is not limited thereto, and the battery cell 200 may be a lithium polymer battery or a cylindrical battery, for example.

The battery cell 200 may include a unit cell 201 (see FIG. 5) and a blocking member 240. The unit cell 201 may include a case 210, a cap plate 220, a vent 230, and a fixing member 250.

The case 210 may form a schematic exterior of the battery cell 200. The case 210 may be formed to be hollow inside and have a shape with a side open. According to an embodiment, the case 210 may be formed to have a shape of a can with an open top. The case 210 may be made of a conductive metal, such as aluminum, an aluminum alloy, or nickel-plated steel.

Inside the case 210, at least one electrode assembly 10 wound with a separator 13, which is an insulator, interposed between a positive electrode 11 and a negative electrode 12 may be accommodated (see FIG. 6). However, the present invention is not limited thereto, and the electrode assembly 10 may have a structure in which positive electrodes 11 and negative electrodes 12 composed of a plurality of sheets are alternately stacked with the separator 13 interposed therebetween.

The positive electrode 11 and the negative electrode 12 may include a coated portion that is a region in which a current collector formed of a thin metal foil is coated with an active material and uncoated portions 11a and 12a that are regions that are not coated with the active material.

The cap plate 220 may be disposed on the case 210 and seal the case 210. The cap plate 220 may be formed to have a generally plate shape and disposed to face the open side of the case 210. According to an embodiment, the cap plate 220 may be disposed to face an upper surface of the case 210. The cap plate 220 may be fixed to an upper end of the case 210 by any of various types of coupling methods, such as welding, bolting, or the like. Accordingly, the internal space of the case 210 may be sealed by an inner surface of the case 210 and a surface of the cap plate 220. According to an embodiment, the internal space of the case 210 may be sealed by the inner surface of the case 210 and an inner surface of the cap plate 220. The cap plate 220, like the case 210, may be made of a conductive material, such as aluminum, an aluminum alloy, or nickel-plated steel.

The cap plate 220 may be formed with a positive electrode terminal 21 electrically connected to the positive electrode 11 of the electrode assembly 10 and a negative electrode terminal 22 electrically connected to the negative electrode 12. In an embodiment, the positive electrode terminal 21 and the negative electrode terminal 22 may be installed to pass through the cap plate 220 and protrude from a side of the cap plate 220. According to an embodiment, the positive electrode terminal 21 and the negative electrode terminal 22 may be installed to protrude upward from the cap plate 220. The positive electrode terminal 21 and the negative electrode terminal 22 may be disposed to be spaced apart from each other along a second direction intersecting the first direction. Here, the second direction may refer to a direction parallel to a Y-axis direction based on FIG. 1.

In an embodiment, outer peripheral surfaces of upper pillars of the positive electrode terminal 21 and the negative electrode terminal 22 protruding outward from the cap plate 220 may be threaded and fixed to the cap plate 220 with nuts. However, the present invention is not limited thereto, and the positive electrode terminal 21 and, in an embodiment, the negative electrode terminal 22 may have a rivet structure so as to be riveted, or may be welded to the cap plate 220.

The positive electrode terminal 21 and the negative electrode terminal 22 may be electrically connected to current collectors including first and second current collectors 40 and 50 (herein referred to as "positive and negative current collectors") that are bonded to the positive uncoated portion 11a or the negative uncoated portion 12a by welding, for example. According to an embodiment, the positive electrode terminal 21 and the negative electrode terminal 22 may be bonded to the positive and negative electrode current collectors 40 and 50 by welding. However, the present invention is not limited thereto, and the positive electrode terminal 21 and the negative electrode terminal 22 and, in an embodiment, the positive and negative electrode current collectors 40 and 50 may be formed by being integrally coupled.

In addition, an insulating member may be installed between the electrode assembly 10 and the cap plate 220. Here, the insulating member may include first and second lower insulating members 60 and 70, and each of the first and second lower insulating members 60 and 70 may be installed between the electrode assembly 10 and the cap plate 220.

In an embodiment, an end of a separating member capable of being installed to face a side surface of the electrode assembly 10 may be installed between the insulating member and the positive electrode terminal 21 and the negative electrode terminal 22.

Here, the separating member may include a first separating member 80 and a second separating member 90.

Therefore, first ends of the first and second separating members 80 and 90 capable of being installed to face a side surface of the electrode assembly 10 may be installed between the first and second lower insulating members 60 and 70 and the positive electrode terminal 21 and the negative electrode terminal 22.

As a result, the positive electrode terminal 21 and the negative electrode terminal 22 bonded to the positive and negative current collectors 40 and 50 by welding may be coupled to the first and second lower insulating members 60 and 70 and the ends of the first and second separating members 80 and 90.

An electrolyte injection port 32 may be formed in the cap plate 220. An electrolyte may be injected into the case 210 through the electrolyte injection port 32. A sealing stopper 33 may be installed at the electrolyte injection port 32. As the sealing stopper 33 is installed at the electrolyte injection port 32, foreign substances may be prevented or substantially prevented from flowing into the case 210.

The vent 230 may be provided on the cap plate 220, and may be opened and closed in conjunction with changes in an internal pressure of the case 210. That is, the vent 230 may remain in a closed state during normal operation of the electrode assembly 10 such that the case 210 is sealed. The vent 230 may be opened as the internal pressure of the case 210 rises above a certain level (e.g., a set level) due to overcharging or a fire, for example, and discharge emissions, such as a flame, gas, and the like, from the inside of the case 210 to the outside of the case 210.

The vent 230 may be disposed between the positive electrode terminal 21 and the negative electrode terminal 22 on the cap plate 220. A thickness of the vent 230 may be thinner than a thickness of the cap plate 220. A notch or the like for inducing fracture of the vent 230 may be formed in the vent 230 when the internal pressure of the case 210 increases. According to an embodiment, the thickness of the vent 230 may be approximately 0.01 mm to approximately 1 mm. A material of the vent 230 may contain metal. According to an embodiment, the vent 230 may include aluminum. The notch may be formed in the vent 230. A portion of the vent 230 in which the notch is formed may be provided with a thinner thickness than a portion of the vent 230 in which the notch is not formed. According to an embodiment, the thickness of the vent 230 may be approximately 0.2 mm, and the notch portion of the vent 230 may be approximately 0.1 mm. As the notch is formed in the vent 230, the portion where the notch is formed may have a weaker physical rigidity than the portion where the notch is not formed. Accordingly, when an event (e.g., a fire, high-pressure gas, or the like) occurs in the battery cell 200, the notch portion of the vent 230 may fracture. As the notch portion of the vent 230 fractures, gas, flames, and the like inside the battery cell 200 may be ejected to the outside of the battery cell 200, thereby reducing the pressure inside the battery cell 200.

The blocking member 240 may be disposed on the cap plate 220. According to an embodiment, the blocking member 240 may be seated on the cap plate 220 and disposed to face the vent 230. When the battery cell 200 has a thermal runaway, the blocking member 240 may prevent or substantially prevent serial thermal runaway of the battery cells 200 by blocking heat from being transferred to a battery cell 200 adjacent to the thermally runaway battery cell 200 and blocking flame or gas from flowing into a vent 230 of the battery cell 200 adjacent to the thermally runaway battery cell 200. The blocking member 240 may be adhered to the cap plate 220.

As illustrated in FIGS. 1 to 8, one blocking member 240 may be provided in one blocking unit 2401, and, thus, the blocking member 240 may be individually installed for each battery cell 200 and each blocking member 240 may be separated from other blocking members.

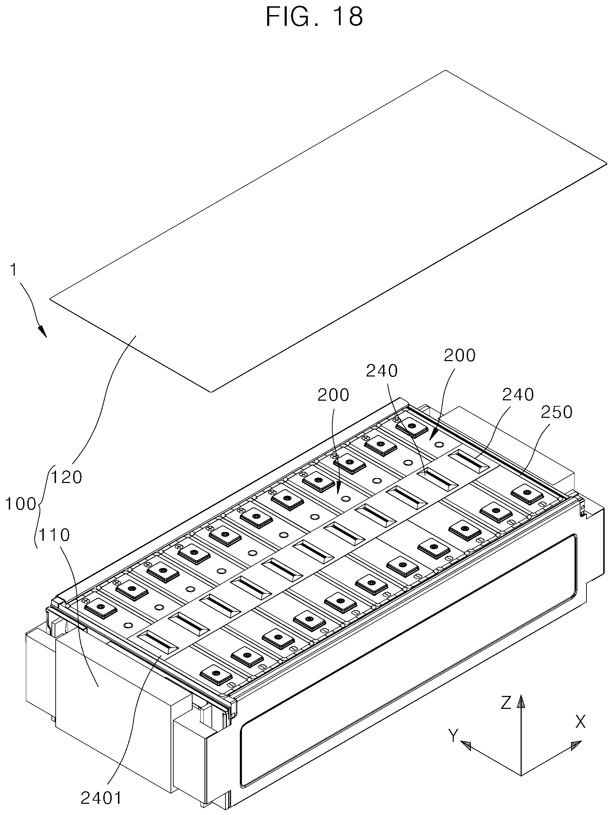

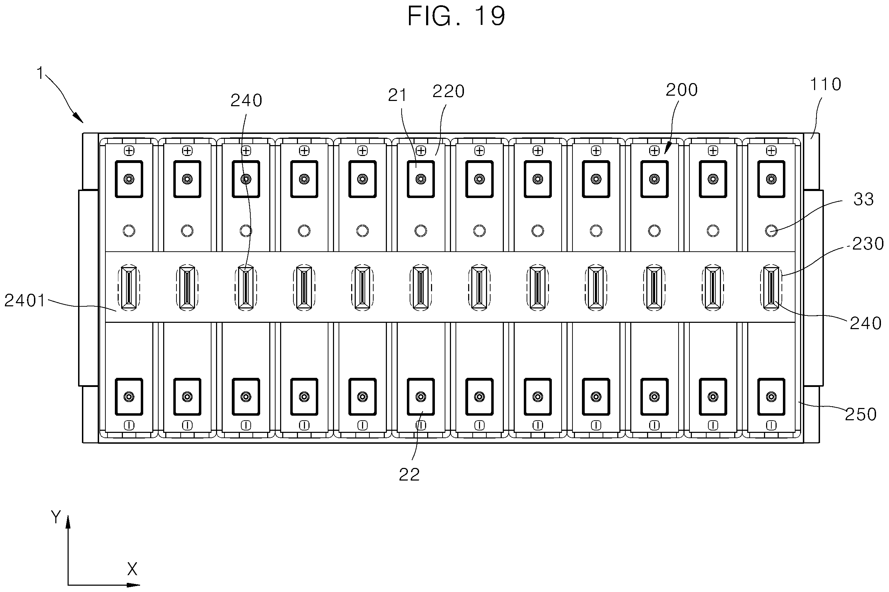

However, as illustrated in FIGS. 18 and 19, in an embodiment, a plurality of blocking members 240 disposed in the respective battery cells 200 may be provided in one blocking unit 2401. In an embodiment, the plurality of blocking members 240 may be connected to each other and integrally provided in the blocking unit 2401.

Accordingly, in an event of thermal runaway of any one battery cell 200, the blocking member 240 installed in the corresponding battery cell 200 may operate independently of the blocking members 240 installed in the remaining battery cells 200, and, thus, the heat blocking performance of the remaining battery cells 200 may be prevented or substantially prevented from deteriorating.

The blocking member 240 may move depending on the pressure difference between the inside and outside of the case 210. According to an embodiment, when the pressure inside the case 210 is greater than the pressure outside the case 210 and the pressure difference is equal to or greater than a certain value (e.g., a set value), the blocking member 240 may move away from the cap plate 220. According to an embodiment, if the pressure inside the case 210 is less than the pressure outside the case 210 and the pressure difference is equal to or greater than a certain value (e.g., a set value), the blocking member 240 may move toward the cap plate 220.

In an embodiment, the blocking member 240 may be formed to have a sheet shape with a generally quadrangular cross-section. The blocking member 240 may be seated on the upper surface of the cap plate 220 at a position facing the vent 230 up and down. An area of the blocking member 240 may be greater than an area of the vent 230.

The blocking member 240 may contain a material with high heat resistance and insulation, such as mica or the like, to prevent or substantially prevent heat damage and prevent or substantially prevent heat applied from the outside from being transferred to the inside of the case 210.

The blocking member 240 may include a first end 241 and a second end 242 (see FIG. 5). The first end 241 and the second end 242 may refer to a pair of end areas spaced apart along a direction parallel to the first direction among entire end areas of the blocking member 240 disposed along a perimeter of the blocking member 240.

The first end 241 and the second end 242 may be disposed on the cap plate 220. That is, a length between the first end 241 and the second end 242 parallel to the first direction may be equal to a length of the cap plate 220 parallel to the first direction, or the length may be smaller than the length of the cap plate 220 parallel to the first direction.

The fixing member 250 may be disposed around (e.g., to surround) the case 210 and the cap plate 220. That is, the fixing member 250 may protect the case 210 from external impacts, foreign substances, and the like.

In an embodiment, the fixing member 250 may be formed to have a thin sheet shape with an adhesive material applied to an inner surface thereof. In an embodiment, the fixing member 250 may include a synthetic resin material, such as polyethylene terephthalate (PET), polybutylene terephthalate (PBT), polypropylene (PP), or the like.

The fixing member 250 may include a first fixing member 251 and a second fixing member 252.

The first fixing member 251 may form an exterior of a side of the fixing member 250, and may be disposed around (e.g., to surround) the case 210. The first fixing member 251 may be formed to be hollow inside and have a shape with a side open. The first fixing member 251 may be formed to have a box shape with an upper side open. In an embodiment, the first fixing member 251 may be disposed such that an inner surface thereof surrounds (e.g., entirely surrounds) remaining peripheral surfaces of the case 210 excluding the open side of the case 210. The inner surface of the first fixing member 251 may be attached and fixed to an outer surface of the case 210 by an adhesive material applied to the inner surface.

The second fixing member 252 may form an exterior of another side of the fixing member 250. The second fixing member 252 may extend from the first fixing member 251, and may be disposed around (e.g., to surround) the cap plate 220.

The second fixing member 252 may include a first extension 252a and a second extension 252b.

The first extension 252a may extend from a side of the first fixing member 251, and may be disposed around (e.g., to surround) the cap plate 220. In an embodiment, the first extension 252a may extend from an upper end of the first fixing member 251 disposed in parallel to the cap plate 220 along a direction parallel to the first direction. In an embodiment, the first extension 252a and the first fixing member 251 may have a cross-sectional shape of approximately an inverted "L" shape.

An inner surface of the first extension 252a may be disposed around (e.g., to surround) an outer surface of the cap plate 220. In an embodiment, the inner surface of the first extension 252a may be attached and fixed to the outer surface of the cap plate 220 using an adhesive material. The first extension 252a may fix the cap plate 220 by a tensile force applied from the first fixing member 251.

The second extension 252b may extend from another side of the first fixing member 251, and may be disposed around (e.g., to surround) the cap plate 220. In an embodiment, the second extension 252b may extend from an upper end of the first fixing member 251 disposed in parallel to the cap plate 220 along a direction parallel to the first direction. In an embodiment, the second extension 252b and the first fixing member 251 may have a cross-sectional shape of approximately an "L" shape.

An inner surface of the second extension 252b may be disposed around (e.g., to surround) the outer surface of the cap plate 220. In an embodiment, the inner surface of the second extension 252b may be attached and fixed to the outer surface of the cap plate 220 using an adhesive material. The second extension 252b may fix the cap plate 220 by the tensile force applied from the first fixing member 251.

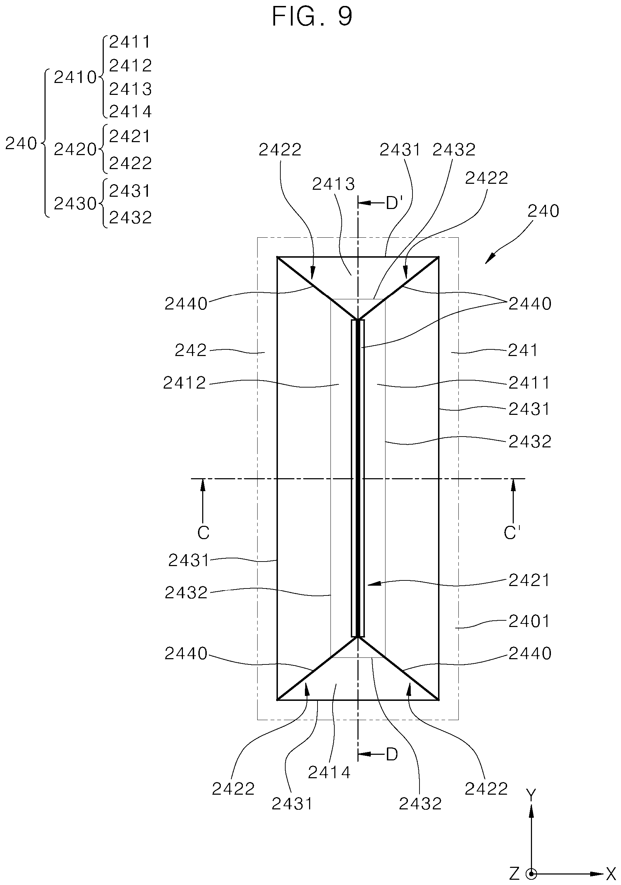

Herein, a blocking member 240 according to an embodiment of the present invention will be described with reference to FIGS. 9 to 24.

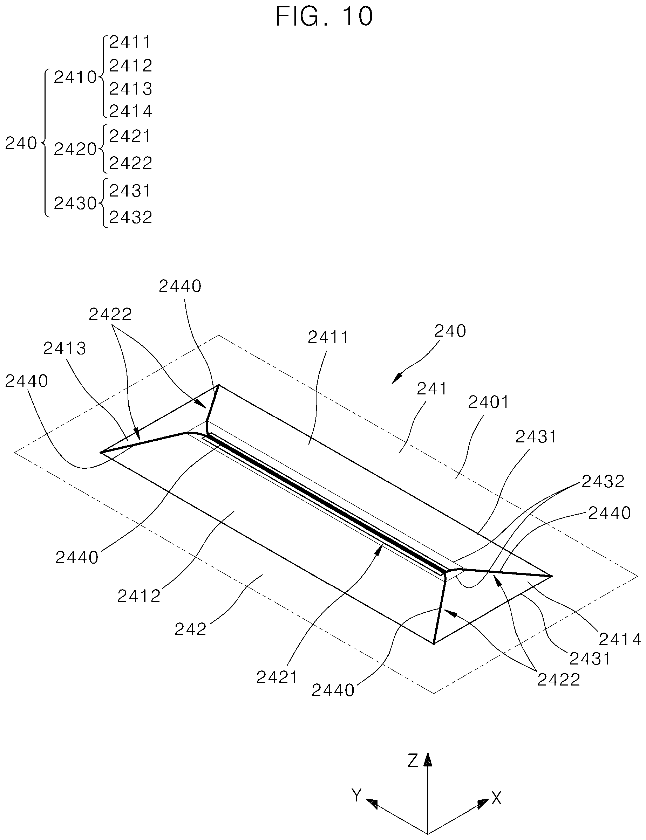

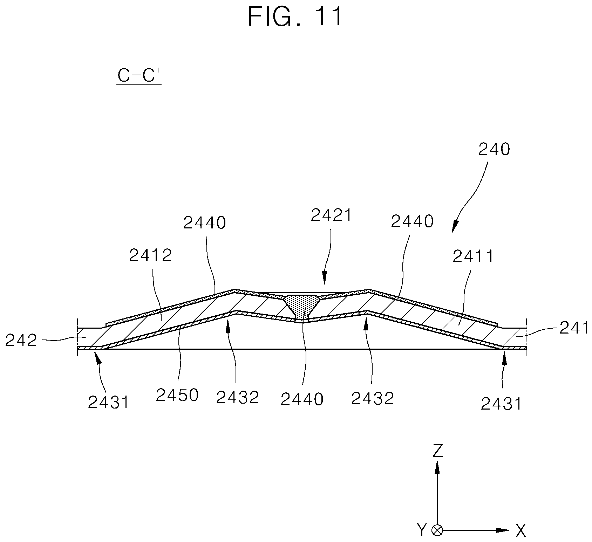

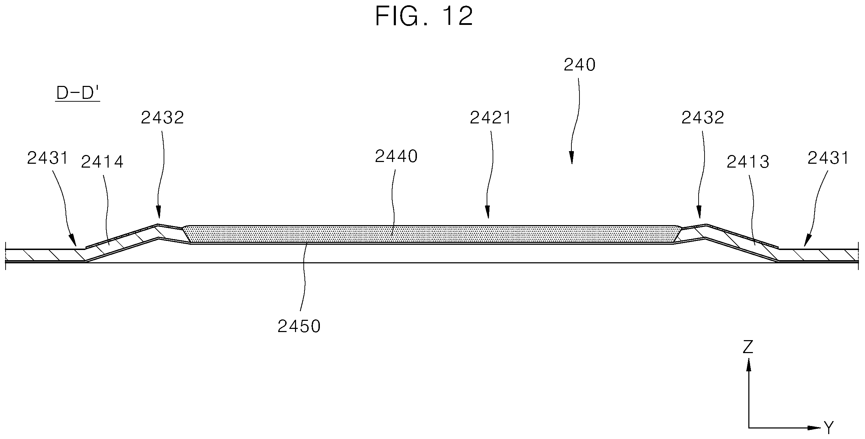

FIG. 9 is a plan view of a blocking member disposed in the battery cell according to an embodiment of the present invention; FIG. 10 is a perspective view of the blocking member disposed in the battery cell according to an embodiment of the present invention; FIG. 11 is a cross-sectional view taken along the line C-C' in FIG. 9; and FIG. 12 is a cross-sectional view taken along the line D-D' in FIG. 9.

The blocking member 240 illustrated in FIGS. 9 to 12 may be the same as the blocking member 240 illustrated in FIGS. 1 to 8. Therefore, description of the same components may be omitted.

Referring to FIGS. 9 to 12, the blocking member 240 may be provided in a blocking unit 2401. The blocking member 240 may include a blocking member piece 2410, a notch 2420, and a bent portion 2430.

In an embodiment, the blocking member piece 2410 may include a first blocking member piece 2411, a second blocking member piece 2412, a third blocking member piece 2413, and a fourth blocking member piece 2414. However, the blocking member piece 2410 may not be provided only with the first blocking member piece 2411, the second blocking member piece 2412, the third blocking member piece 2413, and the fourth blocking member piece 2414, and a number of pieces may be varied as desired.

In an embodiment, the blocking member piece 2410 may be provided in a generally quadrangular shape. According to an embodiment, the blocking member piece 2410 may be provided in a rectangular shape. However, the shape of the blocking member piece 2410 is not limited to the quadrangular shape, and may be provided in any of various shapes, such as a triangle or a circle.

In an embodiment, shapes of the first blocking member piece 2411, the second blocking member piece 2412, the third blocking member piece 2413, and the fourth blocking member piece 2414 may be provided in an approximate trapezoid shape. However, shapes of the first blocking member piece 2411, the second blocking member piece 2412, the third blocking member piece 2413, and the fourth blocking member piece 2414 are not limited to trapezoids, and may be variously provided depending on a shape of the blocking member piece 2410. According to an embodiment, the shapes of the first blocking member piece 2411, the second blocking member piece 2412, the third blocking member piece 2413, and the fourth blocking member piece 2414 may be provided in an arcuate shape, a fan shape, a triangle, a quadrangle, or the like, for example.

In an embodiment, the first blocking member piece 2411 and the second blocking member piece 2412 may be provided to be the same (e.g., identically) to each other, and may be disposed to be line symmetrical. In an embodiment, the third blocking member piece 2413 and the fourth blocking member piece 2414 may be provided the same (e.g., identically) to each other, and may be disposed to be line symmetrical.

The blocking member 240 may include the notch 2420. The notch 2420 may refer to a portion of the blocking member 240 that is cut or concavely formed. According to an embodiment, the notch 2420 may be formed in the blocking member 240 using a tool. The tool may include a knife, a laser, or the like. When the notch 2420 is formed, the blocking members 240 on both, or opposite, sides of the notch 2420 may be attached to each other or spaced apart. The notch 2420 may allow a side of the blocking member 240 with another side to communicate. Accordingly, the notch 2420 may induce fracture of the blocking member 240.

The notch 2420 may include a first notch 2421 and a second notch 2422. The first notch 2421 and a plurality of second notches 2422 may be disposed to be connected. The second notches 2422 may be disposed at both, or opposite, ends of the first notch 2421. The second notches 2422 may extend from the first notch 2421.

According to an embodiment, two second notches 2422 may be disposed at both, or opposite, ends of the first notch 2421, respectively. In an embodiment, at least a portion of the notch 2420 may have a "Y" shape. According to an embodiment, a shape formed by the plurality of second notches 2422 and the first notch 2421 may be provided in an approximately "Y" shape (e.g. two mirrored and joined "Y shapes").

The first notch 2421 may be formed between the first blocking member piece 2411 and the second blocking member piece 2412 or between the third blocking member piece 2413 and the fourth blocking member piece 2414. In an embodiment, the first notch 2421 may be provided as a line segment with a certain length (e.g., a set length). However, a shape of the first notch 2421 is not limited to the line segment, and may be provided in any of various shapes, such as a curve or the like. In an embodiment, the width of the first notch 2421 may be approximately 0.01 mm to 1 mm. According to an embodiment, the width of the first notch 2421 may be approximately 0.05 mm to 0.3 mm.

The second notch 2422 may be formed between the first blocking member piece 2411 and the third blocking member piece 2413, between the first blocking member piece 2411 and the fourth blocking member piece 2414, between the second blocking member piece 2412 and the third blocking member piece 2413, or between the second blocking member piece 2412 and the fourth blocking member piece 2414. In an embodiment, the second notch 2422 may be provided as a line segment with a certain length (e.g., a set length). However, a shape of the second notch 2422 is not limited to the line segment, and may be provided in any of various shapes, such as a curve or the like. In an embodiment, the width of the second notch 2422 may be approximately 0.01 mm to approximately 0.5 mm. According to an embodiment, the width of the second notch 2422 may be approximately 0.05 mm to 0.1 mm.

As the notch 2420 is formed in the blocking member 240, the blocking member piece 2410 may be formed in the blocking unit 2401. Pieces in the blocking member piece 2410 may move independently of each other. According to an embodiment, the first blocking member piece 2411, the second blocking member piece 2412, the third blocking member piece 2413, and the fourth blocking member piece 2414 may move independently of each other. Accordingly, a space, or gap, may be formed between the first blocking member piece 2411, the second blocking member piece 2412, the third blocking member piece 2413, and the fourth blocking member piece 2414.

The bent portion 2430 may be formed in the blocking member 240. The blocking member piece 2410 may be bent and moved with respect to the blocking member 240 through the bent portion 2430.

The bent portion 2430 may include a first bent portion 2431 and a second bent portion 2432.

The first bent portion 2431 may be disposed between the blocking member 240 and the first blocking member piece 2411, between the blocking member 240 and the second blocking member piece 2412, between the blocking member 240 and the third blocking member piece 2413, or between the blocking member 240 and the fourth blocking member piece 2414. As the first bent portion 2431 is provided in the blocking member 240, the first blocking member piece 2411, the second blocking member piece 2412, the third blocking member piece 2413, and the fourth blocking member piece 2414 may be bent and moved with respect to the blocking member 240. In an embodiment, the first bent portion 2431 may be provided as a line segment with a certain length (e.g., a set length). However, a shape of the first bent portion 2431 is not limited to the line segment, and may be provided as a curve, or the like, for example.

The first blocking member piece 2411, the second blocking member piece 2412, the third blocking member piece 2413, and the fourth blocking member piece 2414 may be bent toward a side of the blocking member 240 at the first bent portion 2431 and moved with respect to the blocking member 240. According to an embodiment, the first blocking member piece 2411, the second blocking member piece 2412, the third blocking member piece 2413, and the fourth blocking member piece 2414 may be bent toward the upper side of the blocking member 240 (e.g., a +Z-axis direction) at the first bent portion 2431. In an embodiment, the first blocking member piece 2411, the second blocking member piece 2412, the third blocking member piece 2413, and the fourth blocking member piece 2414 may be inclined at an angle of approximately 1 degree to approximately 20 degrees to the blocking member 240 as bent toward the upper side of the blocking member 240. In an embodiment, as the first blocking member piece 2411, the second blocking member piece 2412, the third blocking member piece 2413, and the fourth blocking member piece 2414 are inclined at an angle of approximately 5 degrees to approximately 20 degrees to the blocking member 240, a space, or gap, may be formed in the first notch 2421 and/or the second notch 2422.

The second bent portion 2432 may be disposed on the first blocking member piece 2411, the second blocking member piece 2412, the third blocking member piece 2413, and the fourth blocking member piece 2414. According to an embodiment, the second bent portion 2432 may be disposed inside the first blocking member piece 2411, the second blocking member piece 2412, the third blocking member piece 2413, and the fourth blocking member piece 2414. Accordingly, a portion of the first blocking member piece 2411 may be bent and moved with respect to another portion of the first blocking member piece 2411, a portion of the second blocking member piece 2412 may be bent and moved with respect to another portion of the second blocking member piece 2412, a portion of the third blocking member piece 2413 may be bent and moved with respect to another portion of the third blocking member piece 2413, and a portion of the fourth blocking member piece 2414 may be bent and moved with respect to another portion of the fourth blocking member piece 2414. In an embodiment, the second bent portion 2432 may be provided as a line segment with a certain length (e.g., a set length). However, a shape of the second bent portion 2432 is not limited to the line segment, and may be provided as a curve, or the like, for example.

The first blocking member piece 2411, the second blocking member piece 2412, the third blocking member piece 2413, and the fourth blocking member piece 2414 may be bent toward a side of the blocking member 240 at the second bent portion 2432. According to an embodiment, the first blocking member piece 2411, the second blocking member piece 2412, the third blocking member piece 2413, and the fourth blocking member piece 2414 may be bent toward the lower side of the blocking member 240 (e.g., a -Z-axis direction) at the second bent portion 2432. In an embodiment, an angle formed in the second bent portion 2432 as the first blocking member piece 2411, the second blocking member piece 2412, the third blocking member piece 2413, and the fourth blocking member piece 2414 are bent toward the lower side of the blocking member 240, the first blocking member piece 2411 may be approximately 1 degree to approximately 20 degrees. In an embodiment, as the angle of approximately 1 degree to approximately 20 degrees is formed in the second bent portion 2432, a space, or gap, may be formed in the first notch 2421 and/or the second notch 2422.

As the blocking member piece 2410 is bent at the first bent portion 2431 and the second bent portion 2432, the blocking member piece 2410 may have any of various shapes. As the blocking member piece 2410 is bent at the first bent portion 2431 and the second bent portion 2432, the blocking member piece 2410 may be provided to protrude to one side of the blocking member 240. According to an embodiment, a shape formed by the first blocking member piece 2411 and the second blocking member piece 2412 may be approximately an "M" shape. In an embodiment, a shape formed by the third blocking member piece 2413 and the fourth blocking member piece 2414 may be approximately an "M" shape.

An adhesive 2440 may be applied to the blocking member 240. According to an embodiment, the adhesive 2440 may be applied to the notch 2420 of the blocking member 240. The adhesive 2440 may be applied to the first notch 2421 and/or the second notch 2422. In this way, as the adhesive 2440 is applied to the first notch 2421 and/or the second notch 2422, the space, or gap, formed in the first notch 2421 and/or the second notch 2422 may be filled with the adhesive 2440. In addition, the adhesive 2440 may adhere the blocking members 240 disposed on both, or opposite, sides of the first notch 2421 and/or the second notch 2422 to each other. According to an embodiment, the adhesive 2440 may adhere the blocking member piece 2410. Accordingly, communication between a side and another side of the blocking member 240 may be blocked. The adhesive 2440 may be provided as any of various adhesives, such as a solid, liquid, gel, or the like. According to an embodiment, the adhesive 2440 may be provided as a pressure sensitive adhesive (PSA). In an embodiment, a melting point of the adhesive 2440 may be approximately 90 degrees Celsius or higher and may be approximately 300 degrees Celsius or less. According to an embodiment, the melting point of the adhesive 2440 may be approximately 150 degrees Celsius.

The space, or gap, formed in the first notch 2421 may be larger than the space, or gap, formed in the second notch 2422. Accordingly, the amount of the adhesive 2440 applied to the first notch 2421 may be greater than the amount of the adhesive 2440 applied to the second notch 2422.

A support member 2450 may be disposed on a side of the blocking member 240. According to an embodiment, the support member 2450 may be disposed on a lower side of the blocking member 240 (e.g., the -Z-axis direction). The shape of the support member 2450 may be the same as or similar to the shape of the blocking member 240. According to an embodiment, the shape of a portion of the support member 2450 may be the same as or similar to the shape of the blocking member piece 2410 of the blocking member 240. Accordingly, the support member 2450 may be disposed to overlap (e.g. underlie) the blocking member 240. As the support member 2450 is disposed on a side of the blocking member 240, the support member 2450 may maintain the blocking member piece 2410 in a certain shape (e.g., a set shape). In an embodiment, the support member 2450 may be made of a material containing polyethylene terephthalate (PET). In an embodiment, a thickness of the support member 2450 may be approximately 0.01 mm to 0.2 mm. According to an embodiment, the thickness of the support member 2450 may be approximately 0.05 mm.

The support member 2450 may be disposed to overlap the blocking member 240 before the adhesive 2440 is applied to the blocking member 240. As the adhesive 2440 is applied to the blocking member 240 after the support member 2450 is disposed on the blocking member 240, the adhesive 2440 may be prevented or substantially prevented from dispersing in the blocking member 240 or passing through the notch 2420. Accordingly, a user may dispose the adhesive 2440 at an accurate position.

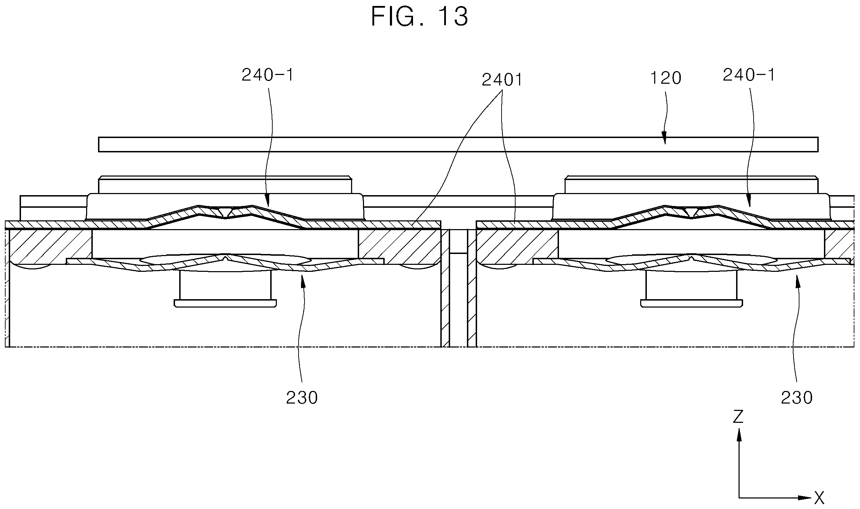

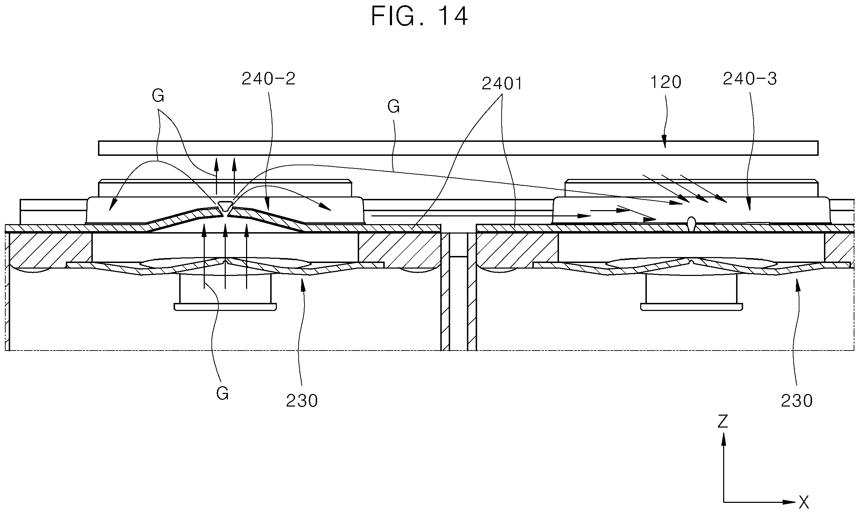

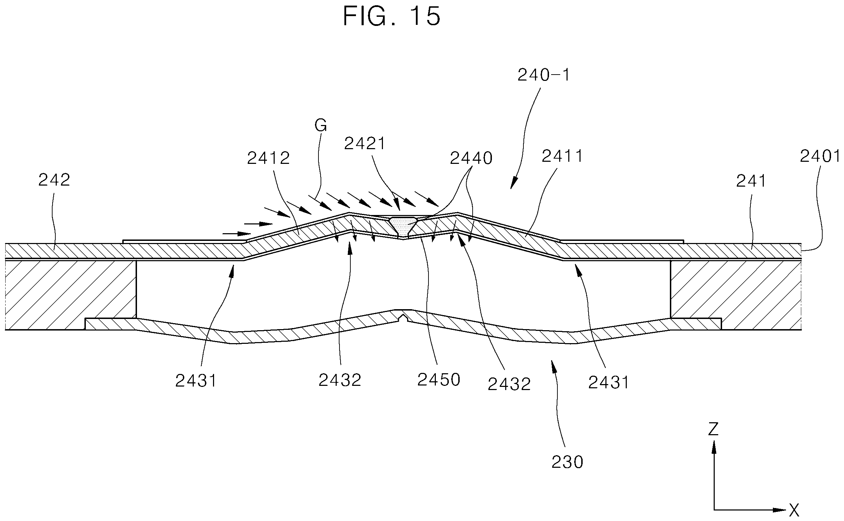

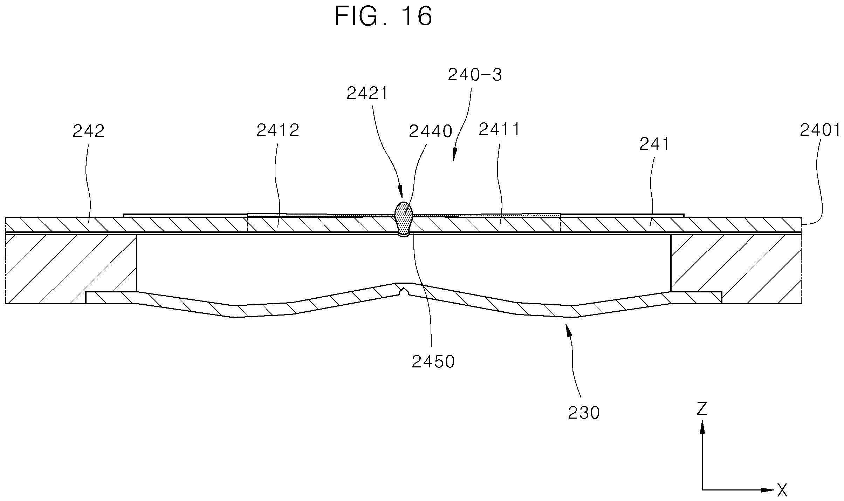

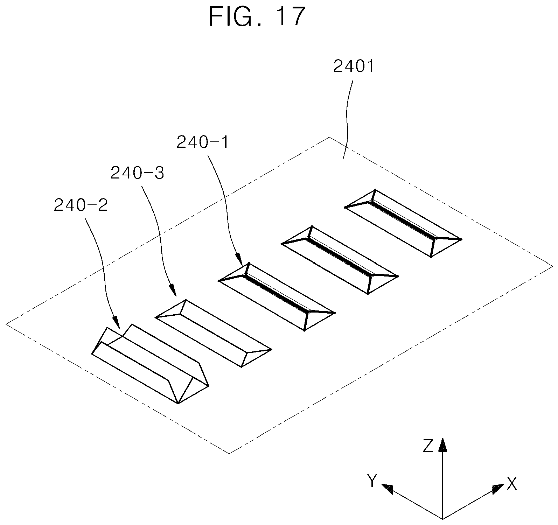

FIG. 13 is a cross-sectional view of a plurality of battery cells arranged side by side without an event occurring, according to an embodiment of the present invention; FIG. 14 is a cross-sectional view of battery cells of which a battery cell in which an event occurs and a battery cell in which an event does not occur are arranged side by side, according to an embodiment of the present invention; FIG. 15 is a cross-sectional view of a blocking member of the battery cell in which an event does not occur, according to an embodiment of the present invention; FIG. 16 is a cross-sectional view of a blocking member of the battery cell in which an event occurs, according to an embodiment of the present invention; and FIG. 17 is a perspective view of various states of the blocking member according to an embodiment of the present invention.

A housing cover 120, a vent 230, a blocking member 240, components included in the blocking member 240, an adhesive 2440, and a support member 2450 shown in FIGS. 13 to 17 may be the same as the housing cover 120, the vent 230, the blocking member 240, the components included in the blocking member 240, the adhesive 2440, and the support member 2450 shown in FIGS. 1 to 12. Therefore, description of the same components may be omitted.

Referring to FIGS. 13 to 17, the state of the blocking member 240 may include three states. According to an embodiment, the blocking member 240 may include a blocking member 240-1 in a normal state, a blocking member 240-2 in an open state, and a blocking member 240-3 in a closed state.

The blocking member 240-1 in the normal state may be a blocking member 240 in a situation where the battery cell 200 normally operates. The blocking member 240-2 in the open state may be a blocking member 240 disposed in a battery cell 200 where an event occurs. The blocking member 240-3 in the closed state may be a blocking member 240 disposed in a battery cell 200 disposed adjacent to the battery cell 200 where an event occurs.

Referring to FIG. 13, no event occurs in the battery cell 200. When the battery module 1 normally operates, high-pressure gas may not be generated in the battery cell 200 and a flame may not be generated. Accordingly, the blocking member 240 disposed in the battery cell 200 may remain in the form of the blocking member 240 shown in FIG. 11 and in the form of the blocking member 240-1 in the normal state shown in FIG. 17.

Referring to FIG. 14, a situation in which an event occurs in the battery cell 200 is shown. When the event occurs in the battery cell 200, foreign substances (e.g., high-pressure gas or flame) G may be generated inside the battery cell 200. As described above, when the event occurs in the battery cell 200, the vent 230 may be damaged due to factors such as the pressure or temperature of the foreign substances G.

When the vent 230 is damaged, the foreign substances G may act on the blocking member 240. The blocking member 240 may be damaged due to factors such as the pressure or temperature of the foreign substances G. According to an embodiment, the blocking member piece 2410 may be damaged. According to an embodiment, the adhesive 2440 disposed on the blocking member piece 2410 may be damaged or melted due to the high pressure or heat of the foreign substances G. The support member 2450 may also be damaged by the foreign substances G.

As the adhesive 2440 is damaged or melted, a side of the blocking member 240 may communicate with another side. According to an embodiment, the upper side (e.g., the +Z-axis direction) and the lower side (e.g., the -Z-axis direction) of the blocking member 240 may be in communication. Accordingly, the foreign substances G inside the battery cell 200 where the event occurs may be discharged to the outside of the battery cell 200.

In addition, as the adhesive 2440 is damaged or melted, deformation may occur in the blocking member 240. As the blocking member 240 is provided with the notch 2420 and the bent portion 2430, deformation may easily occur in the blocking member 240. The blocking member 240 may be transformed into a form that allows foreign substances G inside the battery cell 200 to be easily discharged. The blocking member piece 2410 of the blocking member 240 may be disposed to be bent toward a side of the blocking member 240. According to an embodiment, the blocking member piece 2410 may be disposed to be bent toward the upper side of the blocking member 240 (e.g., the +Z-axis direction).

In a state in which the blocking member piece 2410 is disposed to be bent toward a side of the blocking member 240, the blocking member 240 may be the same as the blocking member 240-2 in the open state shown in FIG. 14 and/or the blocking member 240-2 in the open state shown in FIG. 17.

When an event occurs in the battery cell 200, the foreign substances G discharged from the battery cell 200 may move to a battery cell 200 adjacent to the battery cell 200 where the event occurs. The foreign substances G may move to the blocking member 240-1 in the normal state of the battery cell 200 adjacent to the battery cell 200 where the event occurs in a state of high temperature or high pressure.

The foreign substances G moving to the blocking member 240-1 in the normal state may act as a high pressure or high temperature on the adhesive 2440 and/or the blocking member piece 2410 disposed in the blocking member 240-1 in the normal state. The high-temperature foreign substances G may melt the adhesive 2440 of the blocking member 240-1 in the normal state. In addition, the high-pressure foreign substances G may pressurize the blocking member piece 2410 of the blocking member 240-1 in the normal state in a direction. According to an embodiment, the high-pressure foreign substances G may pressurize the blocking member piece 2410 downward (e.g., in the -Z-axis direction).

As the foreign substances G act as the high pressure or high temperature on the blocking member 240-1 in the normal state of the battery cell 200 adjacent to the battery cell 200 where the event occurs in this way, the blocking member 240-1 in the normal state may be transformed into the blocking member 240-3 in the closed state.

Since a bent part of the blocking member piece 2410 of the blocking member 240-3 in the closed state is unfolded due to the bent portion 2430, the space between the notches 2420 of the blocking member 240 may be reduced or the gap may be eliminated. As the blocking member 240 unfolds in this way, a side and another side of the blocking member 240 may be blocked. According to an embodiment, the upper side (e.g., the +Z-axis direction) and the lower side (e.g., the -Z-axis direction) of the blocking member 240 may be blocked. Accordingly, the foreign substances G may not flow into the adjacent battery cell 200 due to the blocking member 240-3 being in the closed state. The shape of the blocking member 240-3 in the closed state may be the same as the blocking member 240-3 in the closed state shown in FIG. 14, the blocking member 240-3 in the closed state shown in FIG. 16, and/or the blocking member 240-3 in the closed state shown in FIG. 17.

As the blocking member 240 can include the blocking member 240-1 in the normal state, the blocking member 240-2 in the open state, and the blocking member 240-3 in the closed state in this way, thermal runaway of the battery cell 200 may be prevented or substantially prevented, thereby improving the safety of the battery module 1.

FIG. 18 is an exploded perspective view schematically illustrating a configuration of a battery module according to another embodiment of the present invention; and FIG. 19 is a plan view schematically illustrating the configuration of the battery module of FIG. 18.

A housing 100, a housing body 110, a housing cover 120, a battery cell 200, a blocking member 240, and a fixing member 250 shown in FIGS. 18 and 19 may be the same as the housing 100, the housing body 110, the housing cover 120, the battery cell 200, the blocking member 240, and the fixing member 250 shown in FIGS. 1 to 17. Therefore, description of the same components may be omitted.

FIGS. 1 and 2 show an embodiment in which a plurality of blocking members 240 are separately provided in a plurality of blocking units 2401, and FIGS. 18 and 19 show an embodiment in which a plurality of blocking members 240 are connected to be provided in one blocking unit 2401.

Referring to FIGS. 18 and 19, the plurality of blocking members 240 may be connected to each other, or integrally provided. The plurality of blocking members 240 may be provided in the blocking unit 2401. Each of the plurality of blocking members 240 provided in the blocking unit 2401 may be disposed on the cap plate 220 to face the vent 230.

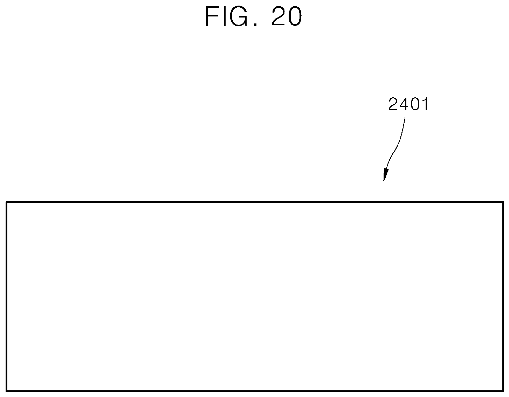

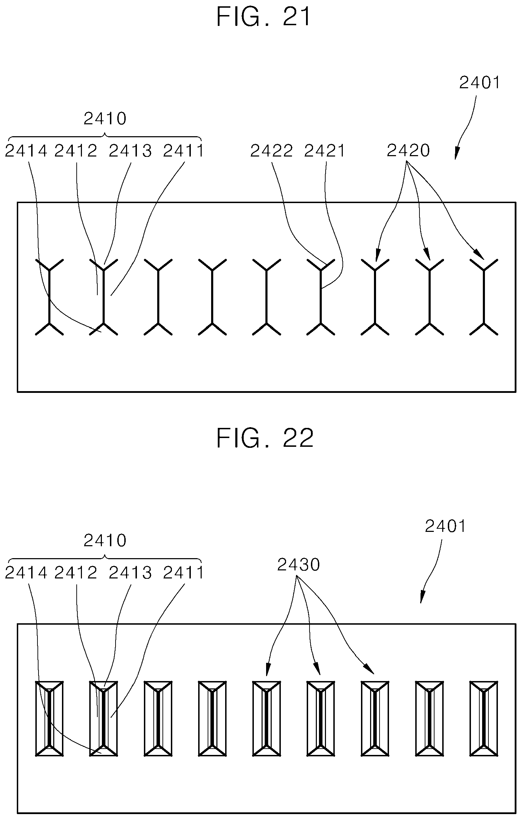

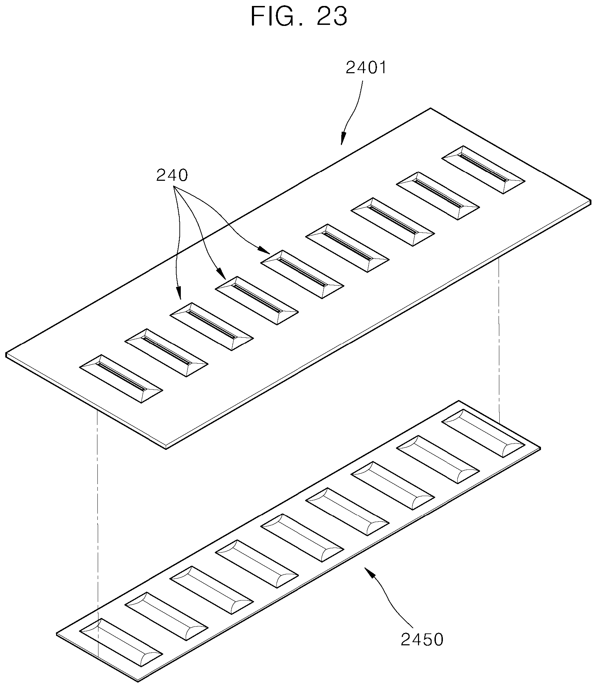

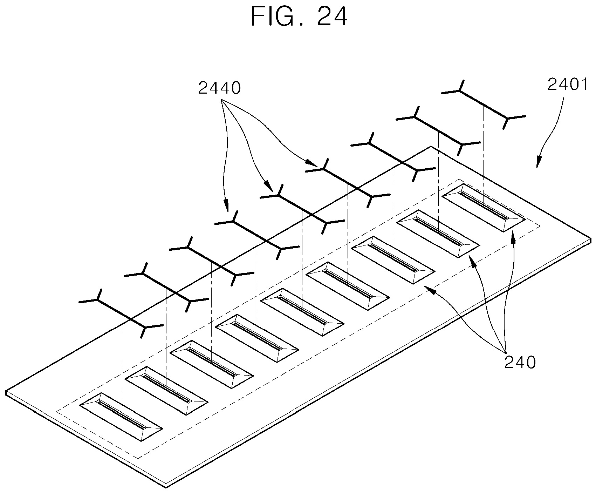

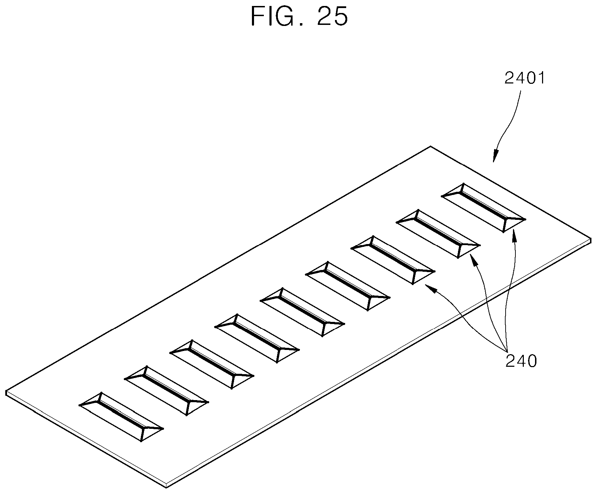

FIG. 20 is a plan view of a blocking unit provided in a set shape according to an embodiment of the present invention; FIG. 21 is a plan view of the blocking unit in which a notch is formed according to an embodiment of the present invention; FIG. 22 is a plan view of a blocking member formed in the blocking unit by forming a bent portion according to an embodiment of the present invention; FIG. 23 is a perspective view of the blocking unit including a support member according to an embodiment of the present invention; FIG. 24 is a perspective view of the blocking member provided with an adhesive according to an embodiment of the present invention; and FIG. 25 is a perspective view of the blocking member according to an embodiment of the present invention.

A blocking member 240 and components included in the blocking member 240 shown in FIGS. 20 to 25 may be the same as the blocking member 240 and the components included in the blocking member 240 shown in FIGS. 1 to 17. Therefore, description of the same components may be omitted.

A process of providing the blocking member piece 2410, the notch 2420, the bent portion 2430, the adhesive 2440, and the support member 2450 of the blocking member 240 will be described with reference to FIGS. 20 to 25.

Referring to FIG. 20, the blocking unit 2401 may be provided in a set shape and size. According to an embodiment, a shape of the blocking unit 2401 may be rectangular. However, the shape of the blocking unit 2401 is not limited to a rectangle, and may be provided in any of various shapes. In an embodiment, the blocking unit 2401 may be made of a material containing mica. The blocking unit 2401 may be provided with a plurality of blocking members 240.

Referring to FIG. 21, the notch 2420 may be formed in the blocking unit 2401. The notch 2420 may be formed by a tool. According to an embodiment, the tool may include a knife, a laser, or the like. In an embodiment, a portion of the notch 2420 may have an approximately "Y" shape (e.g. two mirrored and joined "Y shapes"). However, the shape of the notch 2420 is not limited to the "Y" shape, and the notch 2420 may be provided in any of various shapes. The notch 2420 may include the first notch 2421 and the second notch 2422. According to an embodiment, one first notch 2421 and a plurality of second notches 2422 may be connected. The second notches 2422 may be disposed in a radial shape.

As the notch 2420 is formed in the blocking unit 2401, the blocking member piece 2410 may be formed. The blocking member piece 2410 may include the first blocking member piece 2411, the second blocking member piece 2412, the third blocking member piece 2413, and the fourth blocking member piece 2414. As the notch 2420 is formed, the first blocking member piece 2411, the second blocking member piece 2412, the third blocking member piece 2413, and the fourth blocking member piece 2414 may move independently of each other.

Referring to FIG. 22, the bent portion 2430 may be formed in the blocking unit 2401. The blocking member piece 2410 may be disposed to be bent through the bent portion 2430. The bent portion 2430 may include the first bent portion 2431 and the second bent portion 2432. Through the first bent portion 2431, the blocking member piece 2410 may be bent toward a side of the blocking unit 2401, and through the second bent portion 2432, the blocking member piece 2410 may be bent toward another side of the blocking unit 2401. Accordingly, in an embodiment, the blocking member 240 may be provided in an approximately "M" shape. In an embodiment, as the bent portion 2430 is formed in the blocking unit 2401, a space may be formed in the notch 2420.

Referring to FIG. 23, the support member 2450 may be disposed in or for the blocking unit 2401. The support member 2450 may be disposed on a side of the blocking unit 2401. According to an embodiment, the support member 2450 may be disposed on a lower side of the blocking unit 2401 (e.g., the -Z-axis direction). As the support member 2450 is disposed on the lower side of the blocking unit 2401, the shape of the blocking member 240 formed through the bent portion 2430 may be maintained.

Referring to FIG. 24, the adhesive 2440 may be applied to the blocking unit 2401. According to an embodiment, the adhesive 2440 may be applied to the notch 2420 of the blocking member 240. As the adhesive 2440 is applied to the notch 2420, movement of the blocking member piece 2410 may be restricted. In an embodiment, a side and another side of the blocking member 240 may be blocked. As the adhesive 2440 is applied to the notch 2420 after the support member 2450 is disposed on the blocking unit 2401, the adhesive 2440 may be prevented or substantially prevented from dispersing in the blocking member 240 or passing through the notch 2420. Accordingly, a user may dispose the adhesive 2440 at an accurate position.

Referring to FIG. 25, when the adhesive 2440 is applied to the blocking unit 2401, the blocking member 240 may be provided in the blocking unit 2401. In an embodiment, the blocking unit 2401 may be provided with a plurality of blocking members 240. The blocking unit 2401 provided with the plurality of blocking members 240 may be disposed in or on the battery cells 200. In an embodiment, each blocking member 240 may be disposed on the corresponding battery cell 200 by cutting the blocking unit 2401. The shape of the blocking member 240 of the blocking unit 2401 formed during a process of manufacturing the blocking member 240 may be the same as the shape of the blocking member 240-1 in the normal state shown in FIGS. 13 and 17. The blocking unit 2401 may be cut such that the plurality of blocking members 240 provided in the blocking unit 2401 are separated.

The separated blocking member 240 may be disposed on the cap plate 220 as shown in FIGS. 1 and 2, and the blocking unit 2401 having a plurality of connected blocking members 240 may be disposed on the cap plate 220 as shown in FIGS. 18 and 19.

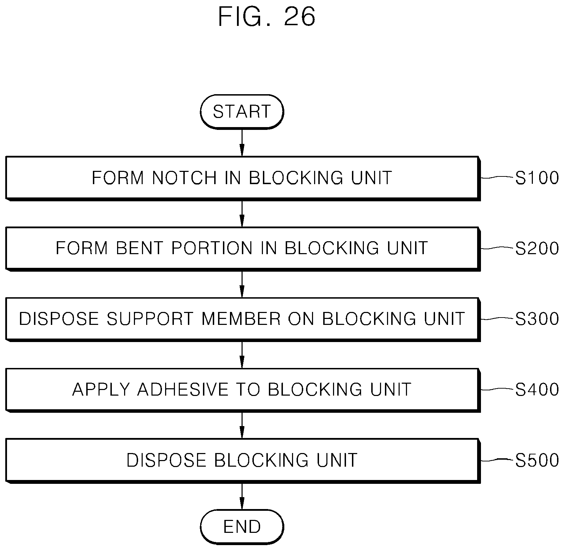

FIG. 26 is a flowchart of a method of manufacturing a battery module according to an embodiment of the present invention.

Referring to FIG. 26, a method of manufacturing a battery module may include an operation of forming a notch 2420 in a blocking unit 2401 (S100).

A blocking member 240 may be provided in the blocking unit 2401. According to an embodiment, one blocking member 240 may be provided in the blocking unit 2401. According to another embodiment, a plurality of blocking members 240 may be provided in the blocking unit 2401.

The notch 2420 may refer to a portion of the blocking member 240 that is cut or concavely formed. According to an embodiment, the notch 2420 may be formed in the blocking member 240 using a tool. According to an embodiment, the tool may include a knife, a laser, or the like. When the notch 2420 is formed, the blocking members 240 on both, or opposite, sides of the notch 2420 may be attached to each other or spaced apart. The notch 2420 may allow a side of the blocking member 240 to communicate with another side. Accordingly, the notch 2420 may induce a fracture of the blocking member 240.

The notch 2420 may include a first notch 2421 and a second notch 2422. The first notch 2421 and a plurality of second notches 2422 may be disposed to be connected. The second notches 2422 may be disposed at both, or opposite, ends of the first notch 2421. The second notches 2422 may extend from the first notch 2421.

According to an embodiment, two second notches 2422 may be disposed at both, or opposite, ends of the first notch 2421, respectively. In an embodiment, at least a portion of the notch 2420 may have an approximately "Y" shape. According to an embodiment, a shape formed by a plurality of second notches 2422 and a first notch 2421 may be provided in an approximately "Y" shape (e.g. two mirrored and joined "Y shapes"). However, a shape of the notch 2420 is not limited to the "Y" shape, and the notch 2420 may be provided in any of various shapes. An order in which the first notch 2421 and the second notches 2422 are formed may vary. According to an embodiment, the second notches 2422 may be formed after the first notch 2421 is formed, the first notch 2421 may be formed after the second notches 2422 is formed, or the first notch 2421 and the second notches 2422 may be concurrently (e.g., simultaneously) formed.

The blocking member 240 may include the blocking member piece 2410. The blocking member piece 2410 may include the first blocking member piece 2411, the second blocking member piece 2412, the third blocking member piece 2413, and the fourth blocking member piece 2414. The first blocking member piece 2411, the second blocking member piece 2412, the third blocking member piece 2413, and the fourth blocking member piece 2414 may be distinguished by the notch 2420.

The method of manufacturing a battery module may include an operation of forming a bent portion 2430 in the blocking unit 2401 (S200).

The blocking member piece 2410 may be bent and moved with respect to the blocking member 240 and/or the blocking unit 2401 through the bent portion 2430. The bent portion 2430 may include the first bent portion 2431 and the second bent portion 2432.

The first bent portion 2431 may be disposed between the blocking member 240 and the first blocking member piece 2411, between the blocking member 240 and the second blocking member piece 2412, between the blocking member 240 and the third blocking member piece 2413, or between the blocking member 240 and the fourth blocking member piece 2414.

The first blocking member piece 2411, the second blocking member piece 2412, the third blocking member piece 2413, and the fourth blocking member piece 2414 may be bent toward a side of the blocking member 240 at the first bent portion 2431 and moved with respect to the blocking member 240.

The second bent portion 2432 may be disposed on the first blocking member piece 2411, the second blocking member piece 2412, the third blocking member piece 2413, and the fourth blocking member piece 2414. According to an embodiment, the second bent portion 2432 may be disposed inside the first blocking member piece 2411, the second blocking member piece 2412, the third blocking member piece 2413, and the fourth blocking member piece 2414.

Accordingly, a portion of the first blocking member piece 2411 may be bent and moved with respect to another portion of the first blocking member piece 2411, a portion of the second blocking member piece 2412 may be bent and moved with respect to another portion of the second blocking member piece 2412, a portion of the third blocking member piece 2413 may be bent and moved with respect to another portion of the third blocking member piece 2413, and a portion of the fourth blocking member piece 2414 may be bent and moved with respect to another portion of the fourth blocking member piece 2414.

According to an embodiment, the blocking member piece 2410 may be bent toward the upper side of the blocking member 240 (e.g., the +Z-axis direction) at the first bent portion 2431, and the blocking member piece 2410 may be bent toward the lower side of the blocking member 240 (e.g., the -Z-axis direction) at the second bent portion 2432.

However, an order in which the first bent portion 2431 and the second bent portion 2432 are formed may be varied. According to an embodiment, the second bent portion 2432 may be formed after the first bent portion 2431 is formed, the first bent portion 2431 may be formed after the second bent portion 2432 is formed, or the first bent portion 2431 and the second bent portion 2432 may be concurrently (e.g., simultaneously) formed.

The method of manufacturing a battery module may include an operation of disposing a support member 2450 on the blocking unit 2401 (S300).

The support member 2450 may be disposed on a side of the blocking unit 2401. According to an embodiment, the support member 2450 may be disposed on a lower side of the blocking unit 2401 (e.g., the -Z-axis direction). A shape of the support member 2450 may be the same as or similar to the shape of the blocking member 240. According to an embodiment, the shape of a portion of the support member 2450 may be the same as or similar to the shape of the blocking member piece 2410 of the blocking member 240. Accordingly, the support member 2450 may be disposed to overlap the blocking member 240. As the support member 2450 is disposed on a side of the blocking member 240, the support member 2450 may maintain the blocking member piece 2410 in a certain shape (e.g., a set shape). The support member 2450 may support the lower side of the blocking unit 2401.

The support member 2450 may be disposed to overlap the blocking member 240 before the adhesive 2440 is applied to the blocking member 240. As the adhesive 2440 is applied to the blocking member 240 after the support member 2450 is disposed on the blocking member 240, the adhesive 2440 may be prevented or substantially prevented from dispersing in the blocking member 240 or passing through the notch 2420. Accordingly, a user may dispose the adhesive 2440 at an accurate position.

The method of manufacturing a battery module may include an operation of applying an adhesive 2440 to the blocking unit 2401 (S400).

The adhesive 2440 may be applied to the blocking member 240 of the blocking unit 2401. According to an embodiment, the adhesive 2440 may be applied to the notch 2420 of the blocking member 240. The adhesive 2440 may be applied to the second notch 2422 and/or the first notch 2421 of the notch 2420. As the adhesive 2440 is applied to the second notch 2422 and/or the first notch 2421, a gap formed in the second notch 2422 and/or a gap formed in the first notch 2421 may be filled with the adhesive 2440. Communication between a side and another side of the blocking member 240 may be blocked. In an embodiment, a melting point of the adhesive 2440 may be approximately 90 degrees Celsius to approximately 300 degrees Celsius. According to an embodiment, the melting point of the adhesive 2440 may be approximately 150 degrees Celsius.

The method of manufacturing a battery module may include an operation of disposing the blocking unit 2401 on a unit cell 201 (S500). According to an embodiment, the blocking unit 2401 including the blocking member 240 may be disposed on the unit cell 201. The blocking unit 2401 may be disposed on the cap plate 220. One or more blocking members 240 may be disposed on the cap plates 220 in a state of being provided in the blocking unit 2401, or the blocking unit 2401 may be cut to allow each blocking member 240 to be disposed on the corresponding cap plate 220.

The blocking unit 2401 may include one or more blocking members 240. The blocking member 240 provided in the blocking unit 2401 may be disposed on the cap plate 220 provided on the unit cell 201. According to an embodiment, the blocking unit 2401 including one blocking member 240 may be disposed on the cap plate 220 provided on the unit cell 201. The operation of disposing the blocking unit 2401 on the unit cell 201 may include an operation of disposing the blocking unit 2401 including one blocking member 240 on the cap plate 220 provided on the unit cell 201.

According to another embodiment, the blocking unit 2401 including one or more blocking members 240 may be disposed on a plurality of cap plates 220 provided on a plurality of unit cells 201, respectively. The operation of disposing the blocking unit 2401 on the unit cell 201 may include an operation of disposing the blocking unit 2401 including a plurality of blocking members 240 on the plurality of cap plates 220 provided on the plurality of unit cells 201.

The method of manufacturing a battery module may include an operation of disposing the blocking unit 2401 including the blocking member 240 on the unit cell 201 and disposing a plurality of unit cells 201 each including the blocking member 240 in the housing 100.

In an embodiment, an operation of disposing the blocking unit 2401 including the blocking member 240 on the unit cell 201 disposed in the housing 100 may be included.

In an embodiment, an operation of disposing a blocking unit 2401 including a plurality of blocking members 240 on the unit cell 201 disposed in the housing 100 may be included. Through the method of manufacturing a battery module, even if an event occurs in the battery cell 200, the foreign substances G generated from the battery cell 200 where the event occurs may be discharged from the battery cell 200, and the foreign substances G may not flow into the battery cell 200 where no event occurs.

Accordingly, the safety of the battery cell 200 may be improved.

In one or more embodiments, in a battery cell, a battery module, and a method of manufacturing a battery module, a blocking member may be opened and closed depending on a state of the battery cell.

In one or more embodiments, in a battery cell, a battery module, and a method of manufacturing a battery module according to an embodiment of the present invention, a blocking member may be opened when an event occurs, and a blocking member disposed in a battery cell adjacent to the battery cell in which the event occurs may be closed, thereby protecting battery cells in which the event does not occur.

Accordingly, in a battery cell, a battery module, and a method of manufacturing a battery module according to one or more embodiments of the present invention, it is possible to improve a lifespan of the battery cell or the battery module.

However, aspects and effects obtainable through the present disclosure are not limited to the above aspects and effects, and other technical aspects and effects that are not mentioned will be clearly understood by those skilled in the art from the following description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

Therefore, the technical scope of the present disclosure should be defined by the claims.

## Claims

1. A battery cell comprising:
a case accommodating an electrode assembly;
a cap plate on the case and sealing the case;
a vent on the cap plate and configured to be opened and closed with pressure changes inside the case; and
a blocking member seated on the cap plate, facing the vent, and movable with pressure changes inside or outside the case.

2. The battery cell as claimed in claim 1, wherein the blocking member is movable toward the cap plate as a pressure outside the case increases to a certain pressure or more than a pressure inside the case.

3. The battery cell as claimed in claim 1 or claim 2, wherein the blocking member is movable away from the cap plate as a pressure inside the case increases to a certain pressure or more than a pressure outside the case.

4. The battery cell as claimed in any one of the preceding claims, wherein the blocking member comprises a notch configured to induce fracture of the blocking member.

5. The battery cell as claimed in claim 4, wherein the notch is configured to allow a side of the blocking member to communicate with another side thereof and comprises:
a first notch having a certain length; and
a second notch extending from the first notch.

6. The battery cell as claimed in claim 4 or claim 5, wherein the blocking member is bent.

7. The battery cell as claimed in claim 6, wherein the blocking member comprises a first bent portion and a second bent portion.

8. The battery cell as claimed in claim 7, wherein the blocking member is bent away from the cap plate at the first bent portion, and bent toward the cap plate at the second bent portion.

9. The battery cell as claimed in any one of claims 4 to 8, wherein the blocking member comprises an adhesive in the notch.

10. The battery cell as claimed in any one of the preceding claims, further comprising a support member arranged to support a lower side of the blocking member.

11. The battery cell as claimed in claim 9 or claim 10, wherein a melting point of the adhesive is 90 to 300 degrees Celsius.

12. A battery module comprising:
a housing; and
a plurality of battery cells in the housing,
wherein each of the plurality of battery cells comprises:
a case accommodating an electrode assembly;
a cap plate on the case and sealing the case;
a vent on the cap plate and configured to be opened and closed in conjunction with pressure changes inside the case; and
a blocking member seated on the cap plate, facing the vent, and movable with a pressure change inside or outside the case.

13. The battery module as claimed in claim 12, wherein the blocking member comprises a plurality of blocking members connected to each other.

14. A method of manufacturing a battery module, the method comprising:
forming a notch for forming a blocking member piece in a blocking unit;
forming a bent portion in the blocking member piece in the blocking unit; and arranging the blocking unit on a unit cell.

15. The method as claimed in claim 14, wherein the forming the notch comprises forming a first notch having a length and a second notch extending from the first notch.
